Europäisches Patentamt

European Patent Office

Office européen des brevets

(11) Numéro de publication : **0 075 497
B1**

(12) **FASCICULE DE BREVET EUROPÉEN**

(45) Date de publication du fascicule du brevet :
21.11.85

(21) Numéro de dépôt : 82401553.1

(22) Date de dépôt : 19.08.82

(51) Int. Cl.⁴ : **B 23 K 35/30**, B 23 K 35/02,
B 23 P 6/04

(54) **Procédé de brasage diffusion destiné aux pièces en superalliages.**

(30) Priorité : 26.08.81 FR 8116283

(43) Date de publication de la demande :
30.03.83 Bulletin 83/13

(45) Mention de la délivrance du brevet :
21.11.85 Bulletin 85/47

(84) Etats contractants désignés :
BE CH DE FR GB IT LI NL SE

(56) Documents cités :
FR-A- 1 218 005
FR-A- 2 132 050
FR-A- 2 192 889
FR-A- 2 296 491

(73) Titulaire : **SOCIETE NATIONALE D'ETUDE ET DE
CONSTRUCTION DE MOTEURS D'AVIATION,
"S.N.E.C.M.A."**
2 Boulevard Victor
F-75015 Paris (FR)

(72) Inventeur : **Lesgourgues, Jacques**
7 bis, blvd. Ambroise Croizat
F-91100 Corbeil (FR)

(74) Mandataire : **Moinat, François**
S.N.E.C.M.A. Service des Brevets Boîte Postale 81
F-91003 Evry Cedex (FR)

Jouve, 18, rue St-Denis, 75001 Paris, France

## Description

L'invention concerne un nouveau procédé de brasage-diffusion destiné aux pièces en superalliages à base de nickel ou de cobalt, c'est-à-dire en alliages réfractaires ayant une teneur pondérale d'au moins 50 % de nickel ou de cobalt.

On rappelle que l'on entend par brasage-diffusion un procédé d'assemblage du genre consistant à disposer entre les faces de liaison des pièces métalliques à assembler (de compositions proches) une couche métallique de liaison de composition globale proche mais comportant en outre au moins un élément d'apport (parfois dit « fondant ») qui la rend plus fusible que le ou les alliages des pièces et qui est capable de diffuser dans celles-ci de telle sorte que lorsqu'un traitement thermique adéquat est appliqué à l'ensemble desdites pièces et de ladite couche de liaison, celle-ci fond au moins partiellement puis se resolidifie par diffusion de l'élément d'apport.

Il est connu d'assembler des pièces en superalliages par brasage-diffusion et notamment des pièces de fonderie. Le brevet français publié sous le n° 2 132 050 décrit par exemple l'application d'un procédé de ce genre à l'assemblage de pièces en superalliages à base de nickel. L'élément d'apport de la couche de liaison doit être choisi de telle sorte qu'il ne provoque pas de phases fragilisantes durant sa diffusion dans les superalliages. C'est pourquoi des éléments tels que l'aluminium, le titane et le carbone sont en principe à éviter dans ladite couche de liaison. Celle-ci contient par exemple, en proportions pondérales pour cent :

15 Cr ; 15 Co ; 5 Mo ; 3 B ; reste Ni.

La mise en œuvre d'un tel procédé impose de grandes précautions. La couche de liaison doit être aussi mince que possible car, plus elle est épaisse

— plus les risques de porosités et de pertes de métal sont grands, à moins de prévoir des joints d'étanchéité autour de la zone de liaison et des réserves de métal, en constituant ainsi un véritable moule,

— plus la diffusion est longue,

— plus la composition et les propriétés des pièces à assembler sont altérées au voisinage des faces de liaison.

Mais plus la couche de liaison est mince et plus les risques d'apparition de défauts de liaison (manques, collages, etc...) sont élevés, ce qui impose d'usiner avec précision les surfaces de liaison des pièces et de soumettre celles-ci à une pression de rapprochement durant l'exécution du procédé.

En fait, tous ces inconvénients viennent de ce que la couche de liaison fond intégralement. Plus précisément, sa température de liquidus est inférieure à la température de solidus des superalliages des pièces. Si l'on désire une liaison d'excellente qualité (pour constituer par exemple une pièce de forme complexe par assemblage de pièces élémentaires) les exigences à respecter font qu'il est parfois impossible de trouver sur le marché un alliage (sous forme de poudre, de feuillard, etc...) dont la composition correspond effectivement à celle de la couche de liaison qu'il importe d'utiliser.

Le procédé de brasage-diffusion de l'invention, destiné à l'assemblage d'au moins deux pièces en superalliages à base de nickel ou de cobalt et de compositions proches, est lui aussi du genre qui consiste d'une part à interposer entre les faces de liaison desdites pièces une couche de liaison de composition globale identique à celle d'un superalliage classique et qui comporte en outre au moins un élément d'apport bore ou silicium qui la rend plus fusible que lesdits superalliages et d'autre part à soumettre l'ensemble à un traitement thermique de brasage-diffusion, ladite couche de liaison étant constituée par un mélange intime d'au moins deux poudres d'alliages en proportions sensiblement inégales, à savoir d'une part, dans la plus forte proportion, une poudre de superalliage dite « poudre de base » ne contenant substantiellement pas d'élément d'apport et d'autre part, dans la plus faible proportion, une poudre d'alliage dite « poudre d'apport » contenant ledit élément d'apport a une teneur telle que la température de liquidus de l'alliage de cette poudre d'apport est inférieure à la température du solidus des superalliages des pièces et de la poudre de base. Le document FR-A 2 296 491 a servi de base pour l'élaboration de ce préambule de la revendication 1. Le procédé est caractérisé en ce que la poudre de base est de nature différente de celle des pièces à assembler et ladite poudre d'apport est constituée des éléments Ni, Co, Si et B. Les systèmes comportant ces éléments présentent d'excellentes propriétés de mouillabilité et évitent, aux températures usuelles de traitement la formation de composés insolubles.

Il résulte de ces dispositions les avantages suivants :

— les phénomènes de dilatation volumique à la fusion et de retrait à la solidification n'affectent que l'alliage de la poudre d'apport et se trouvent atténués dans toute l'épaisseur de la couche de liaison en raison de la présence des grains de la poudre de base ;

— après resolidification, la couche de liaison demeure donc compacte même si son épaisseur est notable (de l'ordre par exemple de quelques dixièmes de millimètre à un millimètre), et ceci d'autant plus que, lors de la fusion de la poudre d'apport, la phase liquide se trouvait retenue par capillarité entre les grains de la poudre de base ;

— quelle que soit l'épaisseur de la couche de liaison, la distance à parcourir par l'élément d'apport jusqu'à diffusion complète est au plus égale à la demi-épaisseur des grains de la poudre de base (s'ils ne sont pas sphériques) ou à leur rayon (s'ils sont sphériques) ;

— la durée de la phase de diffusion du traitement thermique dépend donc beaucoup moins de l'épaisseur de la couche de liaison que dans les procédés de brasage-diffusion de l'art antérieur ;

— il devient possible d'ajuster au mieux la composition chimique de la zone de liaison (après diffusion) en agissant sur les proportions relatives de la poudre de base et de la poudre d'apport, c'est-à-dire que l'on peut dans presque tous les cas utiliser un mélange de poudres disponibles sur le marché ;

— il est même possible d'utiliser une poudre d'apport dont l'élément de base est différent de l'élément de base des pièces et de la poudre de base ; on peut par exemple utiliser, pour l'assemblage de pièces en superalliages à base de cobalt, une poudre de base dont l'élément de base est le cobalt et une poudre d'apport dont l'élément de base est le nickel ;

— il est possible de combiner ou de cumuler l'opération selon l'invention avec un brasage-diffusion de l'art antérieur, ce qui permet de traiter toutes les configurations géométriques possibles sans usinage mécanique des faces à joindre notamment lorsque leur écartement est très faible.

Etant donné sa souplesse, le procédé de l'invention peut avantageusement être mis en œuvre pour de nombreuses applications, et notamment :

— pour réaliser une pièce complexe par assemblage d'au moins deux pièces élémentaires en superalliages ;

— pour obturer une cavité accidentelle (défaut de fonderie, fissure) ou intentionnelle (trou de passage de la portée d'un noyau de fonderie) d'une pièce en superalliage au moyen d'un bouchon constitué lui-même d'un mélange selon l'invention ;

— pour remplacer une portion défectueuse d'une pièce en superalliage ou pour assembler à celle-ci un élément subsidiaire (bossage, nervure de renfort, etc...).

On doit enfin signaler que le procédé de brasage-diffusion de l'invention peut même permettre de réaliser simultanément l'assemblage sur une première pièce d'une deuxième pièce constituée par une ébauche pré-frittée du mélange lui-même, en assurant en même temps la compacification de celle-ci. On dispose au contact de la première pièce l'ébauche pré-frittée constituée par le mélange. Le traitement de brasage-diffusion réalise alors en même temps, d'une part, la compacification et l'homogénéisation de l'ébauche et, d'autre part, son assemblage avec la première pièce. La couche de liaison est alors constituée par la zone superficielle de l'ébauche en contact avec la première pièce. Cette disposition s'applique essentiellement à l'assemblage sur une pièce déjà élaborée d'un élément subsidiaire de forme simple (bossage ou bouchon) dont l'ébauche pré-frittée est d'un prix de revient très faible.

L'invention sera mieux comprise à la lecture de la description complémentaire qui suit et qui se réfère aux dessins annexés dans lesquels :

les figures 1, 2 et 3 sont des diagrammes illustrant les divers états physico-chimiques de la couche de liaison lors de l'exécution du procédé de l'invention ;

la figure 4 est une vue d'une aube fixe de turbine reconditionnée au moyen du procédé de l'invention ;

la figure 5 est une coupe d'une portion d'aube creuse de turbine montrant l'obturation d'un orifice de passage de portée de noyau par un bouchon au moyen du procédé de l'invention.

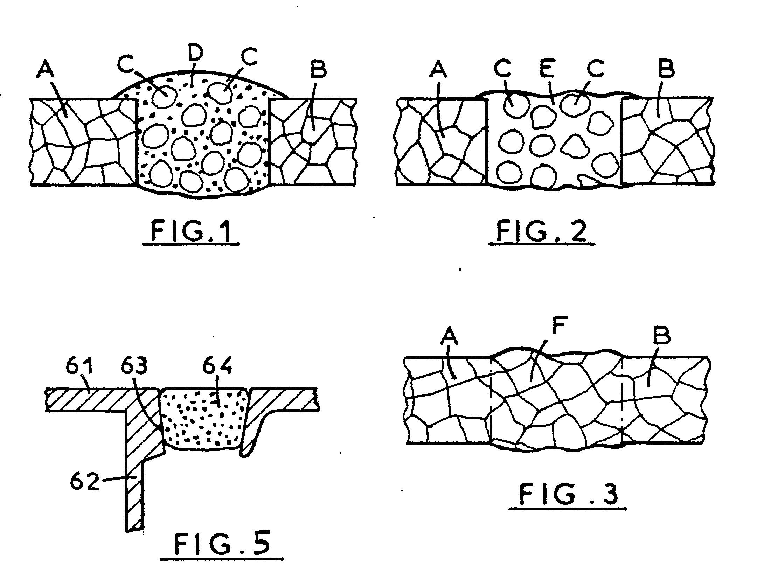

La figure 1 schématise la structure d'une portion d'un ensemble pièces-couche de liaison avant l'exécution du traitement de brasage-diffusion. On y voit une portion de paroi de deux pièces à assembler A et B et le mélange de poudres : les grains C de la poudre de base et les grains D de la poudre d'apport.

La figure 2 schématise la structure lorsque les grains D ont fondu. La phase liquide E à laquelle ils ont donné naissance mouille les parois A et B et les grains C. Elle est retenue par capillarité étant donné les faibles dimensions des grains.

La figure 3 schématise la structure lorsque le traitement de diffusion a été correctement conduit. Il reste une couche intermédiaire solide F de structure métallographique homogène liée par diffusion aux parois des pièces A et B, ce que l'on a symbolisé par le dessin en pointillé des limites de ces parois.

Du fait des phénomènes physiques et métallurgiques intervenant pendant l'opération, le taux de porosité final peut être pratiquement nul.

Ainsi qu'on l'a déjà mentionné, les figures qui suivent sont relatives à des exemples d'application du procédé de l'invention. La description de chacun de ces exemples mentionnera seulement les dispositions essentielles, à savoir :

— la nature du ou des superalliages des pièces à assembler, indiquée au moyen des symboles normalisés en usage,

— la nature du superalliage de la poudre de base et sa granulométrie,

— la composition chimique (teneurs pondérales pour cent) de la poudre d'apport et sa granulométrie,

— les proportions respectives de ces deux poudres,

— l'épaisseur de la couche de liaison réalisée au moyen du mélange de ces poudres,

— enfin, les températures et les durées du cycle de traitement thermique de brasage-diffusion.

Mais on précise dès maintenant certaines dispositions applicables dans ces exemples qui ne seront pas reprises parce qu'elles sont déjà connues par l'homme de l'art.

La mise en place du mélange pulvérulent qui constitue la couche de liaison peut s'effectuer de diverses façons. Si les faces d'assemblage des pièces sont planes et horizontales, on peut interposer ce mélange à l'état libre. Cependant, il est la plupart du temps préférable de lui ajouter un liant organique qui disparaît par pyrolyse au cours du traitement thermique et qui est choisi pour ne pas laisser de résidu carboné. On peut par exemple :

soit introduire la couche de liaison sous la forme d'une pâte fluide résultant de la dispersion du mélange pulvérulent dans une solution de résine acrylique dans le monomère de celle-ci ;

soit l'interposer sous la forme d'une feuille ou d'un ruban réalisé par laminage d'une dispersion dudit mélange pulvérulent dans une résine acrylique.

Quant à la granulométrie des poudres de base et d'apport, elle doit être évidemment choisie pour que la plus grande dimension des grains n'excède pas le jeu entre les pièces à assembler (qui conditionne l'épaisseur de la couche de liaison). On doit cependant mentionner l'intérêt d'utiliser une poudre d'apport d'égale dimension ou plus fine que la poudre de base car le mélange est plus compact. Les grains les plus fins se logent entre les grains les plus gros qui peuvent même venir au contact si le rapport des granulométries est suffisant et si la proportion de poudre d'apport n'est pas trop élevée. Les porosités deviennent alors extrêmement rares.

Il peut être nécessaire de faire suivre le traitement de brasage-diffusion d'un traitement de remise en solution ou de revenu que l'on ne mentionnera pas parce qu'il ne fait pas partie du procédé de l'invention.

Pour éliminer les porosités résiduelles, il est possible de faire suivre le traitement de brasage-diffusion (de préférence réalisé sous vide) par un traitement de compacification sous pression. Mais on peut aussi réaliser le traitement de brasage-diffusion sous pression isostatique en atmosphère inerte, bien que la mise en œuvre exige alors un matériel de traitement plus complexe et plus coûteux.

Enfin, sauf exception, on passera sous silence, parce qu'elles sont du genre connu, les opérations de nettoyage ou de décapage des surfaces à assembler.

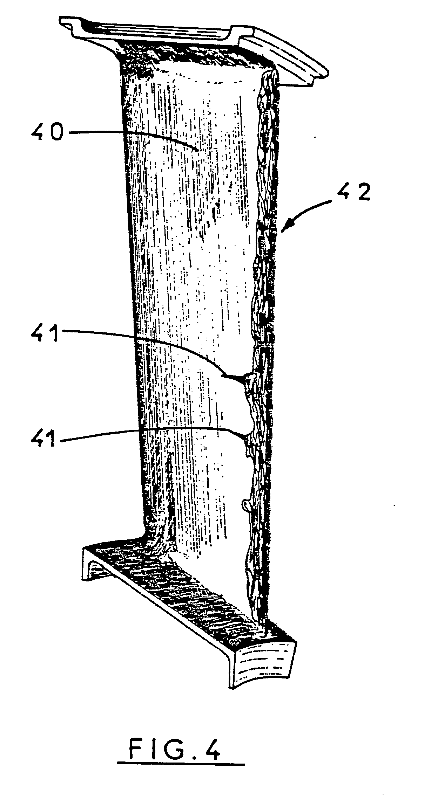

Exemple n° 1 (figure 4)

Cet exemple concerne une aube fixe de turbine 40, coulée de précision en alliage à base de cobalt KC25NW, commercialement connu sous le nom HS31, dégradée par fissuration ou fatigue thermique. Pour le reconditionnement de cette pièce, il est procédé à un rechargement du bord de fuite en vue du ragrément du profil.

La réparation a été conduite selon la gamme de principe suivante :

— remplissage des fissures les plus fines 41 par un métal d'apport à base de NiCrB sous forme d'une pâte constituée de poudre préalliée et d'un liant volatil,

— fusion du métal d'apport et colmatage des fissures par passage à 1 200 °C pendant 15 mn sous vide,

— dépôt d'un matériau selon l'invention constitué de poudre d'alliage base cobalt et de poudre de métal d'apport du type NiCoSiB, sur les parties 42 endommagées du bord de fuite,

— fusion du métal d'apport par passage à 1 200 °C pendant 15 mn sous vide,

— contrôle de l'aspect géométrique des réparations,

— traitement de diffusion à 1 200 °C pendant 4 h sous vide.

Cet exemple illustre donc le cas intéressant où l'élément de base de la poudre d'apport (ici le nickel) est différent de l'élément de base (ici le cobalt) de la poudre de base et des pièces.

Exemple n° 2 (figure 5)

Cet exemple concerne l'obturation, dans le talon 61 d'une aube creuse de turbine 53 en alliage NK15CADT, de l'orifice 63 qui ménageait le passage d'une portée de noyau. La solution traditionnelle consiste à usiner l'orifice pour y loger une bille en acier inoxydable brasée.

La solution de l'invention consiste à assembler une ébauche pré-frittée d'un bouchon de forme 64, cette ébauche étant constituée du mélange de poudres d'alliages suivant :

poudre de base : proportion pondérale 75 % ; granulométrie inférieure à 160 microns, alliage NK17CDAT ;

poudre d'apport : proportion pondérale 25 %, granulométrie inférieure à 40 microns, comprenant 17 Co ; 4 Si ; 2,7 B ; reste Ni (température de solidus 960 °C).

L'ébauche est introduite dans l'orifice et l'ensemble est soumis à un traitement thermique rapide de brasage-diffusion comportant essentiellement un palier de 15 mn à 1 200 °C. Ce traitement permet de réaliser simultanément le frittage de l'ébauche du bouchon 64 et sa liaison avec les parois de l'orifice 63. La couche de liaison est tout simplement constituée par les couches superficielles de l'ébauche en contact avec les parois du trou. Il est inutile d'usiner celui-ci du moment que sa paroi est convenablement décapée.

Outre le fait que la poudre de base et la poudre d'apport sont disponibles sur le marché, les avantages de cette solution sont en fin de compte les suivants :

coût de l'ébauche très faible,

application à la liaison avec des surfaces brutes de moulage.

Ladite solution est d'ailleurs applicable chaque fois qu'il s'agit de rapporter sur une pièce préexistante une portion de pièce supplémentaire telle qu'une nervure, un bossage, etc...

On pourrait indiquer beaucoup d'autres exemples d'utilisation du procédé de l'invention, mais ceux que l'on a donnés suffisent à montrer la variété des applications possibles.

D'une manière générale, les essais de mise au point de l'invention ont montré que, lorsque les pièces à assembler sont en superalliages à base de cobalt, la proportion de la poudre d'apport dans le mélange pulvérulent doit être de préférence comprise entre 5 % et 40 % et que, lorsqu'elles sont en superalliages à base de nickel, cette proportion doit être de préférence comprise entre 5 % et 25 %.

## Revendications

1. Procédé d'assemblage par brasage-diffusion, destiné aux pièces en superalliages à base de nickel ou de cobalt, du genre qui consiste d'une part à interposer entre les faces de liaison desdites pièces une couche de liaison de composition globale identique à celle d'un superalliage classique mais qui comporte en outre au moins un élément d'apport bore ou silicium qui la rend plus fusible que lesdits superalliages et d'autre part à soumettre l'ensemble à un traitement thermique de brasage-diffusion, ladite couche de liaison étant constituée par un mélange intime d'au moins deux poudres d'alliages en proportions sensiblement inégales, à savoir, d'une part, dans la plus forte proportion, une poudre de superalliage dite « poudre de base » ne contenant substantiellement pas d'élément d'apport et d'autre part, dans une plus faible proportion, une poudre d'alliage dite « poudre d'apport » contenant l'élément d'apport à une teneur telle que la température de liquidus de l'alliage de cette poudre d'apport est inférieure à la température de solidus des superalliages des pièces et de la poudre de base, caractérisé en ce que ladite poudre de base est de nature différente de celle des pièces à assembler et ladite poudre d'apport est constituée des éléments nickel, cobalt, silicium, bore.

2. Procédé selon la revendication 1, caractérisé en ce que la proportion pondérale de la poudre d'apport dans le mélange est de 5 à 25 %.

3. Procédé selon l'une quelconque des revendications 1 et 2, caractérisé en ce que les pièces à assembler sont des pièces élémentaires dont l'assemblage permet d'obtenir une pièce de forme complexe.

4. Procédé selon l'une quelconque des revendications 1 à 3, caractérisé en ce que les pièces à assembler sont, d'une part, une pièce dont une portion défectueuse a été enlevée et, d'autre part, un élément de pièce destiné à remplacer ladite portion défectueuse.

5. Procédé selon l'une quelconque des revendications 1 à 4, caractérisé en ce que l'une des pièces est une pièce élémentaire de forme simple à rapporter sur l'autre pièce.

6. Procédé selon la revendication 5, caractérisé en ce que ladite pièce élémentaire est une ébauche pré-frittée constituée par la couche de liaison elle-même.

7. Procédé selon la revendication 5, caractérisé en ce qu'il permet l'obturation d'un orifice de passage de portée de noyau d'une pièce moulée en superalliage.

8. Procédé selon la revendication 1, caractérisé en ce que les surfaces à joindre sont les parois d'une cavité existant dans une pièce.

## Claims

1. Method of assembly by diffusion brazing, intended for parts made of superalloys based on nickel or cobalt, of the type which consists, on the one hand, in interposing between the bonding faces of said parts a connecting layer of an overall composition identical with that of a standard superalloy but which comprises, in addition, at least boron or silicon as an additional element which makes it more fusible than said superalloys and, on the other hand, in subjecting the whole to a diffusion brazing heat treatment, said connecting layer being constituted by an intimate mixture of at least two alloy powders in substantially unequal proportions, viz, on the one hand, in the greater proportion, a superalloy powder referred to as « basic powder » containing substantially no additional element and, on the other hand, in a smaller proportion, an alloy powder referred to as « addition powder » containing the additional element in a quantity such that the temperature of the liquidus of the alloy of this addition powder is below the temperature of the solidus of the superalloys of the parts and of the basic powder, characterised in that said basic powder is of a nature different from that of the parts to be assembled, and said addition powder comprises the elements nickel, cobalt, silicon, boron.

2. Method according to claim 1, characterised in that the weight proportion of the addition powder in the mixture is from 5 to 25 %.

3. Method according to either of claims 1 and 2, characterised in that the parts to be assembled are elementary parts, the joining together of which makes it possible to obtain a part of complex shape.

4. Method according to any one of claims 1 to 3, characterised in that the parts to be assembled are, on the one hand, a part of which a defective portion has been removed and, on the other hand, an element of the part intended to replace said defective portion.

5. Method according to any one of claims 1 to 4, characterised in that one of the parts is an elementary part of simple shape to be fitted onto the other part.

6. Method according to claim 5, characterised in that said elementary part is a pre-sintered blank constituted by the connecting layer itself.

7. Method according to claim 5, characterised in that it permits the sealing of an opening for the passage of a core print of a part cast in superalloy.

8. Method according to claim 1, characterised in that the surfaces to be connected are the walls of a cavity present in a part.

## Patentansprüche

1. Verfahren zum Diffusionshartlöten von Gegenständen aus Superlegierungen auf Nickel- oder Kobaltbasis bei dem einerseits zwischen die Verbindungsflächen der Gegenstände eine Verbindungsschicht gebracht wird, deren globale Zusammensetzung derjenigen einer klassischen Superlegierung entspricht, die jedoch außerdem wenigstens ein Bor- oder Silizium-Flußmittelelement umfaßt, durch das sie leichter schmelzbar wird als die genannten Superlegierugen, und bei dem andererseits das Ganze der Wärmebehandlung zum Diffusionshartlöten unterzogen wird, wobei die genannte Verbindungsschicht aus einer innigen Mischung wenigstens zweier Legierungspulver mit deutlich unterschiedlichen Mengenverhältnissen besteht, nämlich einerseits einem die größere Menge bildenden als « Basispulver » bezeichneten Superlegierungspulver, das im wesentlichen kein Flußmittelelement enthält, und andererseits einem die kleinere Menge bildenden als « Flußmittelpulver » bezeichneten Legierungspulver, das soviel von dem Flußmittelelement enthält, daß die Schmelztemperatur dieses Flußmittelpulvers unter der Erstarrungstemperatur der Superlegierungen der Stücke und des Basispulvers liegt, dadurch gekennzeichnet, daß das Basispulver von anderer Natur ist als die miteinander zu verbindenden Gegenstände, und daß das Flußmittelpulver aus den Elementen Nickel, Kobalt, Silizium, Bor gebildet ist.

2. Verfahren nach Anspruch 1, dadurch gekennzeichnet, daß das Gewichtsverhältnis des Flußmittelpulvers in der Mischung 5 bis 25 % beträgt.

3. Verfahren nach Anspruch 1 oder 2, dadurch gekennzeichnet, daß die miteinander zu verbindenden Gegenstände Elementarteile sind, durch deren Verbindung sich ein Gegenstand mit komplexer Form herstellen läßt.

4. Verfahren nach einem der Ansprüche 1 bis 3, dadurch gekennzeichnet, daß die miteinander zu verbindenden Gegenstände einerseits ein Gegenstand sind, von dem ein Fehlerteil entfernt ist, sowie andererseits ein Ersatzteil, das den Fehlerteil ersetzen soll.

5. Verfahren nach einem der Ansprüche 1 bis 4, dadurch gekennzeichnet, daß der eine der Gegenstände ein einfach geformtes Elementarteil ist, das an dem anderen Gegenstand angesetzt werden soll.

6. Verfahren nach Anspruch 5, dadurch gekennzeichnet, daß das Elementarteil ein vorgesinterter Rohling ist, der aus der Verbindungsschicht selbst besteht.

7. Verfahren nach Anspruch 5, dadurch gekennzeichnet, daß es das Verschließen einer Durchgangsöffnung für eine Kernmarke eines Superlegierungsgußteils ermöglicht.

8. Verfahren nach Anspruch 1, dadurch gekennzeichnet, daß die miteinander zu vereinigenden Oberflächen die Wandungen eines in einem Gegenstand vorhandenen Hohlraums sind.

FIG.1

FIG.2

FIG.5

FIG.3

FIG.4